(19) Europäisches Patentamt
European Patent Office
Office européen des brevets

(11) EP 2 291 413 B1

(12) EUROPÄISCHE PATENTSCHRIFT

(45) Veröffentlichungstag und Bekanntmachung des Hinweises auf die Patenterteilung:
**14.11.2012 Patentblatt 2012/46**

(21) Anmeldenummer: **09765742.3**

(22) Anmeldetag: **03.06.2009**

(51) Int Cl.:
***C08L 53/00*** (2006.01) ***C09J 153/00*** (2006.01)

(86) Internationale Anmeldenummer:
**PCT/EP2009/056766**

(87) Internationale Veröffentlichungsnummer:
**WO 2009/153162 (23.12.2009 Gazette 2009/52)**

(54) **VERFAHREN ZUR HERSTELLUNG EINER WÄSSRIGEN POLYMERISATDISPERSION**

METHOD FOR PREPARING AN AQUEOUS POLYMER DISPERSION

PROCÉDÉ DE PRODUCTION D'UNE DISPERSION AQUEUSE DE POLYMÈRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **17.06.2008 EP 08158422**

(43) Veröffentlichungstag der Anmeldung:
**09.03.2011 Patentblatt 2011/10**

(73) Patentinhaber: **BASF SE**
**67056 Ludwigshafen (DE)**

(72) Erfinder:
- **VENKATESH, Rajan**
**68167 Mannheim (DE)**
- **RAMAN, Vijay, Immanuel**
**68163 Mannheim (DE)**

(56) Entgegenhaltungen:
**EP-B1- 0 771 328**
**WO-A1-98/01478**
**WO-A1-03/055919**
**WO-A1-2006/122344**
**WO-A1-2008/009997**
**DE-A1- 19 839 199**
**US-B2- 6 569 969**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 291 413 B1

## Beschreibung

Gegenstand der vorliegenden Erfindung ist ein Verfahren zur Herstellung einer wässrigen Polymerisatdispersion durch radikalisch initiierte Polymerisation von ethylenisch ungesättigten Monomeren in Anwesenheit wenigstens eines Radikalinitiators und wenigstens einer RAFT-Verbindung in einem wässrigen Polymerisationsmedium, wobei zur Polymerisation

| | |
|---|---|
| ≥ 1 und ≤ 80 Gew.-% | wenigstens eines ethylenisch ungesättigten Monomeren mit einer Löslichkeit ≥ 200 g pro 1000 g entionisiertem Wasser bei 20 °C und 1 atm (absolut) [Monomere A], und |
| ≥20 und ≤ 99 Gew.-% | wenigstens eines ethylenisch ungesättigten Monomeren mit einer Löslichkeit ≤ 100 g pro 1000 g entionisiertem Wasser bei 20 °C und 1 atm (absolut) [Monomere B] |

eingesetzt werden und sich die Monomeren A und B zu 100 Gew.-% (Gesamtmonomerenmenge) addieren, wobei

| | |
|---|---|
| ≥ 0,1 und ≤ 5 Gew.-% | wenigstens einer RAFT-Verbindung, und |
| ≥ 0,01 und ≤ 5 Gew.-% | wenigstens eines Radikalinitiators, jeweils bezogen auf die Gesamtmonomerenmenge, eingesetzt werden, |

weiches dadurch gekennzeichnet ist, dass im wässrigen Polymerisationsmedium zuerst unter Temperatur - und Druckbedingungen unter denen die Halbwertszeiten des Radikolinitiators >5 Stunden betragen lediglich

| | |
|---|---|
| ≥ 50 Gew.-% | der Gesamtmenge der wenigstens einen RAFT-Verbindung, |
| ≥ 10 Gew.-% | der Gesamtmenge des wenigstens einen Monomeren A, |
| ≤ 5 Gew.-% | der Gesamtmenge des wenigstens einen Monomeren B, und |
| ≤ 5 Gew.-% | der Gesamtmenge des wenigstens einen Radikalinitiators |

vorgelegt und daran anschließend die gegebenenfalls verbliebene Restmenge der wenigstens einen RAFT-Verbindung, die gegebenenfalls verbliebene Restmenge des wenigstens einen Monomeren A, die Gesamtmengen bzw. die verbliebenen Restmengen des wenigstens einen Monomeren B und des wenigstens einen Radikalinitiators unter Temperatur - und Druckbedingungen unter denen die Halbwertszeiten des Radikolinitiators ≤ 3 Stunden betragen d.h. unter Polymerisationsbedingungen zugegeben und polymerisiert werden.

Gegenstand der vorliegenden Erfindung sind ebenfalls die nach dem erfindungsgemä-βen Verfahren zugänglichen wässrigen Polymerisatdispersionen, die aus diesen wässrigen Polymerisatdispersionen zugänglichen Polymerisatpulver und die Verwendung der wässrigen Polymerisatdispersionen und der Polymerisatpulver in unterschiedlichsten Anwendungen.

Polymerisationsverfahren unter Verwendung von RAFT-Verbindungen sind Fachmann geläufig (siehe hierzu beispielsweise J. Kristina et al., Macromolecules 1995, 28, Seiten 5381 bis 5385; M.J. Monteiro, J. Polym. Sci., Part A: Polym. Chem. 2005, 43, Seiten 3189 bis 3204 oder Moad et al., Aust. J. Chem. 2005, 58, Seiten 379 bis 410). RAFT-Verbindungen fungieren allgemein als reversible Radikalkettenregler, mit denen das mittlere Molekulargewicht der Polymerisate gezielt eingestellt werden kann (siehe hierzu beispielsweise Ch. Barner-Kowollik, Handbook of RAFT Polymerization 2008, Wiley-VCH, Seite 190). Darüber hinaus weisen die erhaltenen Polymerisate in der Regel eine enge Molekulargewichtsverteilung auf. Verfahren zur Herstellung wässriger Polymerisatdispersionen aus wasserlöslichen und wasserunlöslichen ethylenisch ungesättigten Monomeren unter Verwendung von RAFT-Verbindungen sind hinlänglich bekannt (siehe beispielsweise C.J. Fergusson et al., Macromolecules 2002, 35, Seiten 9243 bis 9245; C.J. Fergusson et al., Macromolecules 2005, 38, Seiten 2191 bis 2204 oder WO 03/55919). Dabei wird in der Regel in einer ersten Polymerisationsstufe zuerst ein wasserlösliches ethylenisch ungesättigtes Monomer in Anwesenheit der RAFT-Verbindung radikalisch polymerisiert und daran anschließend in einer zweiten Polymerisationsstufe ein wasserunlösliches ethylenisch ungesättigtes Monomer in Anwesenheit des Polymerisats der ersten Polymerisationsstufe ebenfalls radikalisch polymerisiert. Dabei entstehen Blockcopolymerisate mit einem hydrophilen Polymerisatblock (aus den wasserlöslichen Monomeren) und einem hydrophoben Polymerisatblock (aus den wasserunlöslichen Monomeren) sowie den Fragmente der RAFT-Verbindung an beiden Enden des Blockcopolymerisats. Durch die Wahl der Art und der Menge der wasserlöslichen und der wasserunlöslichen Monomeren lassen sich die Hydrophilie-/Hydrophobieeigenschaften der Blockcopolymerisate gezielt einstellen. Die erhaltenen Blockcopolymerisate lassen sich aufgrund der gezielt einstellbaren Hydrophilie-/Hydrophobieeigenschaften vorteilhaft als Dispergiermittel bei der radikalisch wässrigen Emulsionspolymerisation oder bei der radikalisch wässrigen Suspensionspolymerisation einsetzen. Nachteilig an den Verfahren des Standes der Technik ist, dass die Herstellung der entsprechenden Blockcopolymerisate sehr zeitaufwändig ist, da zuerst der hydrophile Polymerisatblock und daran anschließend der hydrophobe Polymerisatblock polymerisiert wird.

Aufgabe der vorliegenden Erfindung war die Bereitstellung eines alternativen Verfahrens zur Herstellung von

Copolymerisaten mit gezielt einstellbaren Hydrophilie-/Hydrophobieeigenschaften in einem wässrigen Medium.

Überraschender Weise wurde die Aufgabe durch das eingangs definierte Verfahren gelöst.

Erfindungsgemäß wird klares Wasser, bevorzugt Trinkwasser und insbesondere bevorzugt entionisiertes Wasser eingesetzt, dessen Gesamtmenge so bemessen wird, dass sie 30 bis 90 Gew.-% und vorteilhaft 40 bis 80 Gew.-%, jeweils bezogen auf die nach dem erfindungsgemäßen Verfahren erhaltenen wässrige Polymerisatdispersion, beträgt. Wesentlich ist, dass wenigstens eine Teilmenge, vorteilhaft ≥ 40 Gew.-% und insbesondere vorteilhaft ≥ 70 Gew.-% der Gesamtmenge an Wasser als Bestandteil des wässrigen Polymerisationsmediums im Polymerisationsgefäß gemeinsam mit der RAFT-Verbindung vorgelegt wird. Die gegebenenfalls verbliebene Restmenge an Wasser kann dem Polymerisationsmedium während der Polymerisationsreaktion diskontinuierlich in einer oder mehreren Portionen oder kontinuierlich mit gleich bleibenden oder sich ändernden Mengenströmen, häufig als Bestandteil einer wässrigen Lösung des Radikalinitiators zugeführt werden.

RAFT (reversible addition fragmentation chain transfer)-Verbindungen sind dem Fachmann hinlänglich bekannt (siehe beispielsweise WO 98/01478, WO 03/55919, US-B 6596899, US-B 6569969 sowie Chiefari et al., Macromolecules 2003, 36, Seiten 2273 bis 2283). Bei RAFT-Verbindungen handelt es sich in der Regel um Verbindungen, welche folgende prinzipielle Struktur aufweisen:

Z-(C=S)-S-R

Durch radikalische Polymerisation einer Anzahl n ethylenisch ungesättiger Monomereinheiten X in Anwesenheit einer RAFT-Verbindung werden Polymerisate folgender Struktur erhalten:

Z-(C=S)-S-$[X]_n$-R

Erfindungsgemäß können alle RAFT-Verbindungen eingesetzt werden. Insbesondere können erfindungsgemäß die in der WO 98/01478 gemäß der Formeln (C) und (D) offenbarten RAFT-Verbindungen, insbesondere die Verbindungen (3) bis (29) sowie die in der WO 03/55919 gemäß Formel (5) mit den Struktureinheiten Z und $R^1$, wie auf Seite 12, Zeile 13 bis Seite 17, Zeile 16 definiert, offenbarten RAFT-Verbindungen, insbesondere Verbindungen (15) bis (25), sowie die in der US-B 6596899, insbesondere die in Spalte 2, Zeilen 38 bis 64 offenbarten RAFT-Verbindungen, eingesetzt werden, welche durch ihre ausdrückliche Bezugnahme Bestandteil dieser Schrift sein sollen. Insbesondere bevorzugt werden im erfindungsgemäßen Verfahren 2-(1-Carboxy-1-methylethylsulfanylthiocarbonylsulfanyl)-2-methylpropionsäure [CAS Nr.: 355120-40-0, Formel I], 2-Butylsulfanylthiocarbonylsulfanylpropionsäure [CAS Nr.: 480436-46-2, Formel II] und/oder 3-(Carboxyethylsulfanylthiocarbonyl)propionsäure [CAS Nr.: 15238-06-9, Formel III] als RAFT-Verbindungen eingesetzt

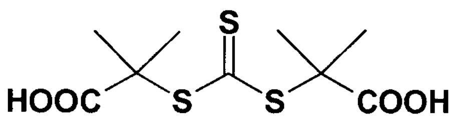

Formel (I)

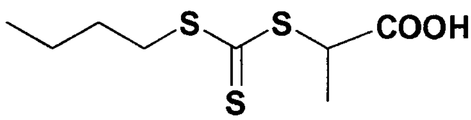

Formel (II)

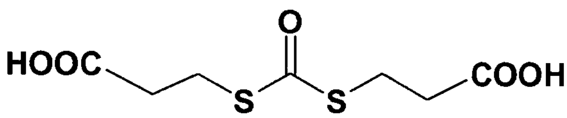

Formel (III)

Bezogen auf die Gesamtmonomerenmenge, beträgt die erfindungsgemäß eingesetzte Menge an RAFT-Verbindungen ≥ 0,1 und ≤ 5 Gew.-%, bevorzugt ≥ 0,5 und ≤ 4 Gew.-% und insbesondere bevorzugt ≥ 1,5 und ≤ 3 Gew.-%.

Als Monomere A kommen prinzipiell alle diejenigen ethylenisch ungesättigten Monomere in Betracht, die bei 20 °C und 1 atm (absolut) eine Löslichkeit ≥ 200 g, bevorzugt ≥ 300 g und insbesondere bevorzugt ≥ 500 g pro 1000 g entionisiertem Wasser aufweisen. Häufig weisen die Monomeren A eine unbegrenzte Löslichkeit mit entionisiertem Wasser auf. Als Monomere A kommen insbesondere solche ethylenisch ungesättigten Monomere in Betracht, welche

wenigstens eine Säuregruppe, insbesondere eine Carbonsäure- oder Sulfonsäuregruppe, eine Hydroxyalkylgruppe, eine Amidgruppe, eine Aminogruppe, eine Ethylenharnstoffgruppe, eine Acetoacetoxygruppe aufweisen. Mit besonderem Vorteil sind die Monomeren A ausgewählt aus der Gruppe umfassend Acrylsäure, Methacrylsäure, 4-Styrolsulfonsäure, 2-Dimethylaminoethylacrylat, 2-Dimethylaminoethylmethacrylat, 2-Acrylamido-2-methylpropansulfonsäure (AMPS), Vinylsulfonsäure, Acrylamid, Methacrylamid, N-(2-Methacryloyloxyethyl)ethylenharnstoff (UMA), N-(2-Acryloyloxyethyl)ethylenharnstoff, 2-Acetoacetoxyethylacrylat, 2-Acetoacetoxyethylmethacrylat (AAEM), Diacetonacrylamid (DAAM), 2-Hydroxyethylacrylat, 2- bzw. 3-Hydroxypropylacrylat, 2-Hydroxyethylmethacrylat und 2- bzw. 3-Hydroxypropylmethacrylat. Insbesondere bevorzugt sind Acrylsäure, Methacrylsäure, Acrylamid, 4-Styrolsulfonsäure, 2-Dimethylaminoethylacrylat, 2-Hydroxyethylacrylat und/oder 2-Acrylamido-2-methylpropansulfonsäure. Selbstverständlich umfassen die Monomeren A auch die Alkalimetal- oder Ammoniumsalze der vorgenannten Monomeren mit einer Säure-, insbesondere einer Carbon- oder Sulfonsäuregruppe.

Als Monomere B kommen alle diejenigen ethylenisch ungesättigten Monomere in Betracht, die bei 20 °C und 1 atm (absolut) eine Löslichkeit $\leq$ 100 g, bevorzugt $\leq$ 60 g und insbesondere bevorzugt $\leq$ 20 g pro 1000 g entionisiertem Wasser aufweisen.

Als Monomere B kommen insbesondere in einfacher Weise mit den Monomeren A radikalisch copolymerisierbare ethylenisch ungesättigte Verbindungen in Betracht, wie beispielsweise Olefine, wie Ethylen oder Propylen, vinylaromatische Monomere, wie Styrol, $\alpha$-Methylstyrol, o-Chlorstyrol oder Vinyltoluol, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl-, pentyl-, -hexyl-, -heptyl-, -octyl-, -nonyl-, -decyl- und -2-ethylhexylester, Fumar- und Maleinsäuredimethylester oder -di-n-butylester, Nitrile $\alpha,\beta$-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren B, einen Anteil von $\geq$ 70 Gew.-%, bevorzugt $\geq$ 90 Gew.-% und insbesondere bevorzugt $\geq$ 95 Gew.-% auf sich vereinen oder sogar die Gesamtmenge der Monomeren B bilden.

Monomere B, die üblicherweise die innere Festigkeit der Verfilmungen einer Polymermatrix bzw. der Polymerpartikel erhöhen, weisen normalerweise wenigstens eine Epoxygruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit $\alpha,\beta$-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Cyclopentadienylacrylat, Triallylcyanurat oder Triallylisocyanurat. Vorteilhaft werden die vorgenannten vernetzenden Monomeren B in Mengen von $\leq$ 30 Gew.-%, bevorzugt jedoch in Mengen von $\leq$ 10 Gew.-%, jeweils bezogen auf die Gesamtmenge an Monomeren B, eingesetzt. Häufig werden jedoch keinerlei derartige vernetzende Monomeren B eingesetzt.

Mit besonderem Vorteil sind die Haupt- bzw. die Gesamtmengen Monomeren B ausgewählt aus der Gruppe umfassend Methylacrylat, Ethylacrylat, n-Butylacrylat, tert.-Butylacrylat, 2-Ethylhexylacrylat, 2-Propylheptylacrylat, Methylmethacrylat, Ethylmethacrylat, n-Butylmethacrylat, tert.-Butylmethacrylat, 2-Ethylhexylmethacrylat, 2-Propylheptylmethacrylat, 2-Phenoxyethylacrylat, Styrol, Vinyltoluol, 2-Methylstyrol, 4-Methylstyrol, 2-n-Butylstyrol, 4-n-Butylstyrol, 4-n-Decylstyrol, Vinylacetat, Vinylpropionat, Acrylnitril und Methacrylnitril.

Im erfindungsgemäßen Verfahren beträgt die Gesamtmenge an Monomeren A $\geq$ 1 und $\leq$ 80 Gew.-%, vorteilhaft $\geq$ 15 und $\leq$ 70 Gew.-% und insbesondere vorteilhaft $\geq$ 25 und $\leq$ 60 Gew.-% und dementsprechend die Gesamtmenge an Monomeren B $\geq$ 20 und $\geq$ 99 Gew.-%, vorteilhaft $\geq$ 30 und $\leq$ 85 Gew.-% und insbesondere vorteilhaft $\geq$ 40 und $\leq$ 75 Gew.-%, wobei sich die Mengen an Monomeren A und an Monomeren B zu 100 Gew.-% addieren.

Die Auslösung der radikalisch initiierten Polymerisationsreaktion erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid, sowie Dialkyl- oder Diarylperoxide, wie Di-tert.-Butyl- oder Di-Cumylperoxid eingesetzt werden. Als Azoverbindung finden im

wesentlichen 2,2'-Azobis(isobutyronitril), 2,2'-Azobis(2,4-dimethylvaleronitril) und 2,2'-Azobis(amidinopropyl)dihydrochlorid (AI-BA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. Erfindungsgemäß beträgt die Menge des eingesetzten Radikalinitiators, bezogen auf die Gesamtmonomerenmenge, ≥ 0,01 und ≤ 5 Gew.-%, bevorzugt ≥ 0,1 und ≤ 4 Gew.-% und insbesondere bevorzugt ≥ 0,3 und ≤ 2 Gew.-%.

Verfahrenswesentlich ist, dass in einem wässrigen Polymerisationsmedium zuerst lediglich ≥ 50 Gew.-% der Gesamtmenge der wenigstens einen RAFT-Verbindung, ≥ 10 Gew.-% der Gesamtmenge des wenigstens einen Monomeren A, ≤ 5 Gew.-% der Gesamtmenge des wenigstens einen Monomeren B, und ≤ 5 Gew.-% der Gesamtmenge des wenigstens einen Radikalinitiators vorgelegt und daran anschließend die gegebenenfalls verbliebene Restmenge der wenigstens einen RAFT-Verbindung, die gegebenenfalls verbliebene Restmenge des wenigstens einen Monomeren A, die Gesamtmengen bzw. die gegebenenfalls verbliebenen Restmengen des wenigstens einen Monomeren B und des wenigstens einen Radikalinitiators unter Polymerisationsbedingungen zugegeben und polymerisiert werden.

Vorteilhaft werden im wässrigen Polymerisationsmedium ≥ 80 Gew.-%, insbesondere vorteilhaft ≥ 90 Gew.-% der Gesamtmenge und bevorzugt die Gesamtmenge der wenigstens einen RAFT-Verbindung, ≥ 50 Gew.-%, insbesondere vorteilhaft ≥ 90 Gew.-% der Gesamtmenge und bevorzugt die Gesamtmenge des wenigstens einen Monomeren A, ≤ 5 Gew.-%, insbesondere vorteilhaft ≤ 1 Gew.-% der Gesamtmenge des wenigstens einen Monomeren B, bevorzugt jedoch keinerlei Monomere B, und ≤ 5 Gew.-%, insbesondere vorteilhaft ≤ 1 Gew.-% der Gesamtmenge des wenigstens einen Radikalinitiators, bevorzugt jedoch keinerlei Radilkalinitiator, vorgelegt. Wird Radikalinitiator ebenfalls im wässrigen Polymerisationsmedium vorgelegt, so werden die Art und die Menge des Radikalinitiators sowie Temperatur- bzw. Druckbedingungen in der Vorlage so gewählt, dass keine Polymerisationsreaktion initiiert wird (d.h. beispielsweise die Halbwertszeiten des Radikalinitiators > 5 Stunden betragen).

Daran anschließend wird die gegebenenfalls verbliebene Restmenge der wenigstens einen RAFT-Verbindung, die gegebenenfalls verbliebene Restmenge des wenigstens einen Monomeren A, die Gesamtmengen bzw. die gegebenenfalls verbliebenen Restmengen des wenigstens einen Monomeren B und des wenigstens einen Radikalinitiators unter Polymerisationsbedingungen zugegeben und polymerisiert werden. Dabei können der RAFT-Verbindungen, Monomeren A, der Monomeren B sowie die Radikalinitiatoren dem wässrigen Polymerisationsmedium jeweils diskontinuierlich in einer oder mehreren Portionen oder kontinuierlich mit gleich bleibenden oder sich ändernden Mengenströmen zugeführt werden. Mit Vorteil werden die gegebenenfalls verbliebene Restmenge der wenigstens einen RAFT-Verbindung, die gegebenenfalls verbliebene Restmenge des wenigstens einen Monomeren A, die Gesamtmengen bzw. die gegebenenfalls verbliebenen Restmengen des wenigstens einen Monomeren B und des wenigstens einen Radikalinitiators unter Polymerisationsbedingungen kontinuierlich, insbesondere mit gleich bleibenden Mengenströmen zugegeben.

Wird dem wässrigen Polymerisationsmedium sowohl die gegebenenfalls verbliebene Restmenge wenigstens eines Monomeren A wie auch Gesamtmenge bzw. der gegebenenfalls verbliebenen Restmenge des wenigstens einen Monomeren B unter Polymerisationsbedingungen zugegeben, so erfolgt deren Zugabe vorteilhaft dergestalt, dass die Dosierzeit der gegebenenfalls verbliebenen Restmenge des wenigstens einen Monomeren A ≤ 50 %, insbesondere vorteilhaft < 30 % der Dosierzeit der Gesamtmenge bzw. der gegebenenfalls verbliebenen Restmenge des wenigstens einen Monomeren B beträgt.

Dabei werden unter Polymerisationsbedingungen generell diejenigen Temperaturen und Drücke verstanden, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, Polymerisationstemperatur und Polymerisationsdruck so gewählt, dass immer genügend Startradikale zur Verfügung stehen, um die Polymerisationsreaktion zu initiieren bzw. aufrechtzuerhalten. Insbesondere werden die Polymerisationstemperatur und der Polymerisationsdruck so gewählt, dass die Halbwertszeit des eingesetzten Radikalinitiators ≤ 3 Stunden, vorteilhaft ≤ 1 Stunde und insbesondere vorteilhaft ≤ 30 Minuten beträgt.

Als Reaktionstemperatur für die erfindungsgemäße radikalische wässrige Emulsionspolymerisation kommt der gesamte Bereich von 0 bis 170 °C in Betracht. Dabei werden in der Regel Temperaturen von 50 bis 120 °C, häufig 60 bis 110 °C und oft 70 bis 100 °C angewendet. Die erfindungsgemäße radikalische wässrige Emulsionspolymerisation kann bei einem Druck kleiner, gleich oder größer 1 atm [1,013 bar (absolut) Atmosphärendruck] durchgeführt werden, so dass die Polymerisationstemperatur 100 °C übersteigen und bis zu 170 °C betragen kann. Vorzugsweise werden leichtflüchtige Monomere, wie beispielsweise Ethylen, Butadien oder Vinylchlorid unter erhöhtem Druck polymerisiert.

Dabei kann der Druck 1,2, 1,5, 2, 5, 10, 15 bar (absolut) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige Emuslionspolymerisation bei 1 atm unter Sauerstoffausschluß, beispielsweise unter Inertgasatmosphäre, wie beispielsweise unter Stickstoff oder Argon durchgeführt.

Das wässrige Reaktionsmedium kann vorteilhaft zusätzlich noch ≥ 0,1 und ≤ 20 Gew.-%, bevorzugt ≥ 1 und ≤ 15 Gew.-% und insbesondere bevorzugt ≥ 3 und ≤ 10 Gew.-% eines organischen Lösungsmittels mit einer Löslichkeit ≥ 200 g pro 1000 g entionisiertem Wasser bei 20 °C und 1 atm (absolut), bezogen auf die Gesamtwassermenge der wässrigen Polymerisatdispersion enthalten. Wesentlich bei der erfindungsgemäßen Verwendung eines organischen Lösungsmittels ist, dass wenigstens eine Teilmenge, vorteilhaft ≥ 50 Gew.-% und insbesondere vorteilhaft ≥ 80 Gew.-% der Gesamtmenge oder die Gesamtmenge an organischem Lösungsmittel als Bestandteil des wässrigen Polymerisationsmediums im Polymerisationsgefäß gemeinsam mit der RAFT-Verbindung vorgelegt wird. Die gegebenenfalls verbliebene Restmenge an organischem Lösungsmittel kann dem Polymerisationsmedium diskontinuierlich in einer oder mehreren Portionen oder kontinuierlich mit gleich bleibenden oder sich ändernden Mengenströmen während der Polymerisationsreaktion zugeführt werden.

Als geeignete organische Lösungsmittel seien beispielhaft aliphatische $C_1$- bis $C_5$-Alkohole, wie Methanol, Ethanol, n-Propanol, iso-Propanol, n-Butanol sowie dessen isomeren Verbindungen, n-Pentanol sowie dessen isomere Verbindungen etc., aliphatische $C_3$- bis $C_4$-Ketone, wie Aceton oder Ethylmethylketon sowie cyclische Ether, wie Tetrahydrofuran oder Dioxan genannt.

Erfindungsgemäß können optional auch übliche Dispergiermittel, wie Emulgatoren und/oder Schutzkolloide in Mengen von 0,1 bis 10 Gew.-%, bezogen auf die Gesamtmonomerenmenge, verwendet werden. Vorteilhaft wird jedoch das erfindungsgemäße Verfahren ohne die entsprechenden Dispergiermittel durchgeführt.

Mit besonderem Vorteil erfolgt das erfindungsgemäße Verfahren dergestalt, dass die Monomeren A und B unter Polymerisationsbedingungen bis zu einem Umsatz von ≥ 95 Gew.-%, vorteilhaft ≥ 98 Gew.-% und insbesondere vorteilhaft ≥ 99 Gew.-% umgesetzt werden. Häufig ist es vorteilhaft, wenn die nach Abschluss der Polymerisation erhaltene wässrige Polymerisatdispersion einer Nachbehandlung zur Reduzierung des Restmonomerengehalts unterzogen wird. Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation) und/oder physikalisch, beispielsweise durch Strippung der wässrigen Polymerisatdispersion mit Wasserdampf oder Inertgas. Entsprechende chemische und/oder physikalische Methoden sind dem Fachmann geläufig [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115]. Dabei bietet die Kombination aus chemischer und physikalischer Nachbehandlung den Vorteil, dass neben den nicht umgesetzten ethylenisch ungesättigten Monomeren, auch noch andere störende leichtflüchtige organischen Bestandteile (die sogenannten VOCs [volatile organic compounds]) aus der wässrigen Polymerisatdispersion entfernt werden.

Durch gezielte Variation von Art und Menge der Monomeren A und B ist es dem Fachmann erfindungsgemäß möglich, wässrige Polymerisatdispersionen herzustellen, deren Polymerisate eine Glasübergangstemperatur bzw. einen Schmelzpunkt im Bereich von -60 bis 270 °C aufweisen. Selbstverständlich können auch Stufen- oder Mehrphasenpolymerisate mit mehreren Glasübergangstemperaturen hergestellt werden. Abhängig vom geplanten Einsatzzweck der wässrigen Polymerisatdispersionen werden Polymerisate hergestellt, welche wenigstens eine Polymerphase aufweisen, deren Glasbübergangstemperatur ≥ -60 und ≤ 10 °C (Klebstoffe), ≥ 10 und ≤ 100 °C (Bindemittel für Beschichtungsformulierungen) oder ≥ 80 °C (harte Lackfilme) beträgt.

Mit der Glasübergangstemperatur $T_g$, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur bzw. der Schmelzpunkt wird nach dem DSC-Verfahren ermittelt (Differential Scanning Calorimetry, 20 K/min, midpoint-Messung, DIN 53765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd

Ed. J.Wiley, New York 1975, und 3rd Ed. J. Wiley, New York 1989).

Die erfindungsgemäß erhaltenen wässrigen Polymerisatdispersionen weisen üblicherweise Polymerisatfeststoffgehalte von ≥ 10 und ≤ 70 Gew.-%, häufig ≥ 15 und ≤ 65 Gew.-% und oft ≥ 20 und ≤ 60 Gew.-%, jeweils bezogen auf die wässrige Polymerzusammensetzung, auf.

Der über quasielastische Lichtstreuung (ISO-Norm 13 321) ermittelte zahlenmittlere Teilchendurchmesser der erhaltenen Polymerisatdispersionen (cumulant z-average) liegt in der Regel zwischen 5 und 1000 nm, häufig zwischen 10 und 500 nm und oft zwischen 15 und 200 nm. In Ausnahmefällen (hoher Anteil an Monomeren A und niedriger Anteil an Monomeren B) können die nach dem erfindungsgemäßen Verfahren zugänglichen Polymerisate auch im wässrigen Polymerisationsmedium gelöst vorliegen. Die entsprechenden Polymerisatlösungen sollen ebenfalls unter dem Begriff "wässrige Polymerisatdispersion" subsummiert sein.

Durch die Wahl von Art und Mengen der Monomeren A und B lassen sich die Hydrophilie-/Hydrophobieeigenschaften der nach dem erfindungsgemäßen Verfahren zugänglichen Polymerisate gezielt einstellen. Diese Polymerisate eignen sich daher in vorteilhafter Weise als maßgeschneiderte Dispergiermittel bei der radikalischen wässrigen Emulsionspolymerisation oder bei der radikalisch wässrigen Suspensionspolymerisation.

Selbstverständlich können die nach dem erfindungsgemäßen Verfahren zugänglichen erfindungsgemäßen wässrigen Polymerisatdispersionen als Komponente bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln und Kunststoffen eingesetzt werden.

Ferner sind aus den erfindungsgemäßen wässrigen Polymerisatdispersionen in einfacher Weise (beispielsweise Gefrier- oder Sprühtrocknung) die entsprechenden Polymerisatpulver zugänglich. Diese erfindungsgemäß zugänglichen Polymerisatpulver lassen sich ebenfalls als Komponente bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln und Kunststoffen einsetzen.

Die Herstellung der wässrigen Polymerisatdispersionen nach dem erfindungsgemäßen Verfahren weist darüber hinaus den Vorteil auf, dass die Polymerisationszeiten deutlich kürzer sind als bei den bekannten Verfahren zur Herstellung der entsprechenden Blockcopolymeren. Darüber hinaus weisen die nach dem erfindungsgemäßen Verfahren zugänglichen wässrigen Polymerisatdispersionen einen deutlich geringeren Anteil an löslichen Komponenten auf.

Die Erfindung soll anhand nachfolgender nicht einschränkender Beispiele erläutert werden.

Beispiele

Beispiel 1

In einem 2 l-Vierhalskolben, ausgerüstet mit einem Anker-Rührer, Rückflusskühler und Dosiereinrichtungen wurden bei 20 bis 25 °C (Raumtemperatur) und unter Stickstoffatmosphäre 1035 g entionisiertes Wasser, 113 g Acrylsäure, 7,5 g 2-(1-Carboxy-1-methylethylsulfanylthiocarbonylsulfanyl)-2-methylpropionsäure, 60 g Aceton vorgelegt und unter Rühren auf 85 °C aufgeheizt. Nach Erreichen von 83 °C wurden 4,0 g einer 7 gew.-%igen wässrigen Lösung von Natriumpersulfat sowie 4,5 g entionisiertes Wasser zugegeben und die erhaltene Lösung 20 Minuten bei 85 °C gerührt. Danach wurde der Monomerzulauf, bestehend aus 263 g Styrol und der Initiatorzulauf, bestehend aus 26 g entionisiertem Wasser und 23 g einer 7 gew.-%igen wässrigen Lösung von Natrimpersulfat, zeitgleich beginnend gestartet und der Monomerenzulauf in 3 Stunden und der Initiatorzulauf in 4 Stunden kontinuierlich mit gleichmäßigen Mengenströmen zudosiert. Anschließend ließ man die erhaltene wässrige Polymerisatdispersion noch 2 Stunde bei 85 °C nachreagieren. Die erhaltene wässrige Polymerisatdispersion wies einen Feststoffgehalt von 25 Gew.-%, bezogen auf das Gesamtgewicht der wässrigen Dispersion, auf. Die mittlere Teilchengröße der Polymerisatpartikel betrug 39 nm. Der Gehalt an wasserlöslichen Bestandteilen in der wässrigen Polymerisatdispersion betrug 1,1 Gew.-%, bezogen auf die wässrige Polymerisatdispersion.

Der Feststoffgehalt wurde generell bestimmt, indem ca. 1 g der wässrigen Polymerisatdispersion in einem offenen Aluminiumtigel mit einem Innendurchmesser von ca. 3 cm in einem Trockenschrank bei 150 °C bis zur Gewichtskonstanz getrocknet wurde. Zur Bestimmung des Feststoffgehalts wurden jeweils zwei separate Messungen durchgeführt und der entsprechende Mittelwert gebildet.

Die Bestimmung der mittleren Teilchengröße der Polymerisatpartikel erfolgte generell nach der Methode der quasielastischen Lichtstreuung (DIN-ISO 13321) mit einem High Performance Particle Sizer (HPPS) der Fa. Malvern Instruments Ltd.

Der Gehalt an wasserlöslichen Bestandteilen in der wässrigen Polymerisatdispersion wurde generell bestimmt, indem ca. 40 g der wässrigen Polymerisatdispersion für 180 Minuten bei 50000 Umdrehungen in der Minute zentrifugiert wurden, danach ca. 2 g der klaren, über dem Polymerisat befindlichen wässrigen Lösung entnommen und diese in einem offenen Aluminiumtigel mit einem Innendurchmesser von ca. 3 cm in einem Trockenschrank bei 150 °C bis zur Gewichtskonstanz getrocknet wurden.

Beispiel 2

Die Herstellung von Beispiel 2 erfolgte analog Beispiel 1 mit dem Unterschied, dass lediglich 5,5 g 2-(1-Carboxy-1-methylethylsulfanylthiocarbonylsulfanyl)-2-methylpropionsäure sowie 44 g Aceton vorgelegt und 2,0 g 2-(1-Carboxy-1-methylethylsulfanylthiocarbonylsulfanyl)-2-methylpropionsäure, gelöst in 16 g Aceton parallel zum Monomerenzulauf mit gleich bleibendem Mengenstrom zudosiert.

Die erhaltene wässrige Polymerisatdispersion wies einen Feststoffgehalt von 24,8 Gew.-%, bezogen auf das Gesamtgewicht der wässrigen Dispersion, auf. Die mittlere Teilchengröße der Polymerisatpartikel betrug 60 nm. Der Gehalt an wasserlöslichen Bestandteilen in der wässrigen Polymerisatdispersion betrug 1,5 Gew.-%, bezogen auf die wässrige Polymerisatdispersion.

Beispiel 3

Die Herstellung von Beispiel 3 erfolgte analog Beispiel 1 mit dem Unterschied, dass anstelle von 7,5 g 2-(1-Carboxy-1-methylethylsulfanylthiocarbonylsulfanyl)-2-methylpropionsäure 7,5 g 2-Butylsulfanylthiocarbonylsulfanylpropionsäure eingesetzt wurden.

Die erhaltene wässrige Polymerisatdispersion wies einen Feststoffgehalt von 25,1 Gew.-%, bezogen auf das Gesamtgewicht der wässrigen Dispersion, auf. Die mittlere Teilchengröße der Polymerisatpartikel betrug 24 nm. Der Gehalt an wasserlöslichen Bestandteilen in der wässrigen Polymerisatdispersion betrug 1,1 Gew.-%, bezogen auf die wässrige Polymerisatdispersion.

Beispiel 4

Die Herstellung von Beispiel 4 erfolgte analog Beispiel 1 mit dem Unterschied, dass anstelle von 7,5 g 2-(1-Carboxy-1-methylethylsulfanylthiocarbonylsulfanyl)-2-methylpropionsäure 7,5 g 3-(Carboxyethylsulfanylthiocarbonyl) propionsäure eingesetzt wurden.

Die erhaltene wässrige Polymerisatdispersion wies einen Feststoffgehalt von 24,7 Gew.-%, bezogen auf das Gesamtgewicht der wässrigen Dispersion, auf. Die mittlere Teilchengröße der Polymerisatpartikel betrug 35 nm. Der Gehalt an wasserlöslichen Bestandteilen in der wässrigen Polymerisatdispersion betrug 1,3 Gew.-%, bezogen auf die wässrige Polymerisatdispersion.

Beispiel 5

Die Herstellung von Beispiel 5 erfolgte analog Beispiel 1 mit dem Unterschied, dass lediglich 20 g Acrylsäure vorgelegt und 93 g Acrylsäure parallel mit dem Monomerenzulauf zudosiert wurden.

Die erhaltene wässrige Polymerisatdispersion wies einen Feststoffgehalt von 24,9 Gew.-%, bezogen auf das Gesamtgewicht der wässrigen Dispersion, auf. Die mittlere Teilchengröße der Polymerisatpartikel betrug 100 nm. Der Gehalt an wasserlöslichen Bestandteilen in der wässrigen Polymerisatdispersion betrug 3,5 Gew.-%, bezogen auf die wässrige Polymerisatdispersion.

Beispiel 6

Die Herstellung von Beispiel 6 erfolgte analog Beispiel 5 mit dem Unterschied, dass die 93 g Acrylsäure innerhalb von einer Stunde mit gleich bleibendem Mengenstrom zudosiert wurden.

Die erhaltene wässrige Polymerisatdispersion wies einen Feststoffgehalt von 25,2 Gew.-%, bezogen auf das Gesamtgewicht der wässrigen Dispersion, auf. Die mittlere Teilchengröße der Polymerisatpartikel betrug 60 nm. Der Gehalt an wasserlöslichen Bestandteilen in der wässrigen Polymerisatdispersion betrug 2,1 Gew.-%, bezogen auf die wässrige Polymerisatdispersion.

Beispiel 7

Die Herstellung von Beispiel 7 erfolgte analog Beispiel 1 mit dem Unterschied, dass anstelle von 263 g Styrol eine Mischung aus 257 g Styrol und 6 g Divinylbenzol (Isomerengemisch der Fa. Sigma-Aldrich) eingesetzt wurde.

Die erhaltene wässrige Polymerisatdispersion wies einen Feststoffgehalt von 25,3 Gew.-%, bezogen auf das Gesamtgewicht der wässrigen Dispersion, auf. Die mittlere Teilchengröße der Polymerisatpartikel betrug 44 nm. Der Gehalt an wasserlöslichen Bestandteilen in der wässrigen Polymerisatdispersion betrug 1,3 Gew.-%, bezogen auf die wässrige Polymerisatdispersion.

Beispiel 8

Die Herstellung von Beispiel 8 erfolgte analog Beispiel 1 mit dem Unterschied, dass 263 g n-Butylacrylat anstelle von 263 g Styrol eingesetzt wurden.

Die erhaltene wässrige Polymerisatdispersion wies einen Feststoffgehalt von 24,8 Gew.-%, bezogen auf das Gesamtgewicht der wässrigen Dispersion, auf. Die mittlere Teilchengröße der Polymerisatpartikel betrug 49 nm. Der Gehalt an wasserlöslichen Bestandteilen in der wässrigen Polymerisatdispersion betrug 1,1 Gew.-%, bezogen auf die wässrige Polymerisatdispersion.

Beispiel 9

Die Herstellung von Beispiel 9 erfolgte analog Beispiel 1 mit dem Unterschied, dass 113 g 4-Styrolsulfonsäure anstelle von 113 g Acrylsäure eingesetzt wurden.

Die erhaltene wässrige Polymerisatdispersion wies einen Feststoffgehalt von 24,9 Gew.-%, bezogen auf das Gesamtgewicht der wässrigen Dispersion, auf. Die mittlere Teilchengröße der Polymerisatpartikel betrug 35 nm. Der Gehalt an wasserlöslichen Bestandteilen in der wässrigen Polymerisatdispersion betrug 1,0 Gew.-%, bezogen auf die wässrige Polymerisatdispersion.

Vergleichsbeispiel 1

Die Herstellung von Vergleichsbeispiel 1 erfolgte analog Beispiel 2 mit dem Unterschied, dass lediglich 0,5 g 2-(1-Carboxy-1-methylethylsulfanylthiocarbonylsulfanyl)-2-methylpropionsäure sowie 4 g Aceton vorgelegt und 7,0 g 2-(1-Carboxy-1-methylethylsulfanylthiocarbonylsulfanyl)-2-methylpropionsäure, gelöst in 56 g Aceton parallel zum Monomerenzulauf mit gleich bleibendem Mengenstrom zudosiert.

Die erhaltene hochviskose wässrige Polymerisatdispersion wies einen Feststoffgehalt von 25,4 Gew.-%, bezogen auf das Gesamtgewicht der wässrigen Dispersion, auf. Die mittlere Teilchengröße der Polymerisatpartikel lag außerhalb des regulären Messbereichs [dabei wurden uneinheitliche Angaben erhalten: 1,7 μm bzw. 3,0 μm]. Aufgrund der hohen Viskosität konnte der Gehalt an wasserlöslichen Bestandteilen in der wässrigen Polymerisatdispersion nicht ermittelt werden.

Vergleichsbeispiel 2

Die Herstellung von Vergleichsbeispiel 2 erfolgte analog Beispiel 2 mit dem Unterschied, dass lediglich 2,0 g 2-(1-Carboxy-1-methylethylsulfanylthiocarbonylsulfanyl)-2-methylpropionsäure sowie 16 g Aceton vorgelegt und 5,5 g 2-(1-Carboxy-1-methylethylsulfanylthiocarbonylsulfanyl)-2-methylpropionsäure, gelöst in 44 g Aceton parallel zum Monomerenzulauf mit gleich bleibendem Mengenstrom zudosiert.

Die erhaltene wässrige Polymerisatdispersion wies einen Feststoffgehalt von 24,8 Gew.-%, bezogen auf das Gesamtgewicht der wässrigen Dispersion, auf. Die erhaltene wässrige Polymerisatdispersion war multimodal und wies drei ausgewiesene Maxima (ca. 70 nm, ca. 320 nm sowie ca. 4,6 μm) auf. Der Gehalt an wasserlöslichen Bestandteilen in der wässrigen Polymerisatdispersion betrug 7,9 Gew.-%, bezogen auf die wässrige Polymerisatdispersion.

## Patentansprüche

**1.** Verfahren zur Herstellung einer wässrigen Polymerisatdispersion durch radikalisch initiierte Polymerisation von ethylenisch ungesättigten Monomeren in Anwesenheit wenigstens eines Radikalinitiators und wenigstens einer RAFT-Verbindung in einem wässrigen Polymerisationsmedium, wobei zur Polymerisation

≥ 1 und ≤ 80 Gew.-% wenigstens eines ethylenisch ungesättigten Monomeren mit einer Löslichkeit ≤ 200 g pro 1000 g entionisiertem Wasser bei 20 °C und 1 atm (absolut) [Monomere A], und
≥ 20 und ≤ 99 Gew.-% wenigstens eines ethylenisch ungesättigten Monomeren mit einer Löslichkeit ≤ 100 g pro 1000 g entionisiertem Wasser bei 20 °C und 1 atm (absolut) [Monomere B]

eingesetzt werden und sich die Monomeren A und B zu 100 Gew.-% (Gesamtmonomerenmenge) addieren, wobei

≥ 0,1 und ≤ 5 Gew.-% wenigstens einer RAFT-Verbindung, und
≥ 0,01 und ≤ 5 Gew.-% wenigstens eines Radikalinitiators, jeweils bezogen auf die Gesamtmonomerenmenge, eingesetzt werden,

**dadurch gekennzeichnet, dass** im wässrigen Polymerisationsmedium zuerst unter tTemperature - und Druckbedingungen unter denen die Halbwertszeiten des Radikalinitiators > 5 Stunden betragen lediglich

≥ 50 Gew.-% der Gesamtmenge der wenigstens einen RAFT-Verbindung,
≥ 10 Gew.-% der Gesamtmenge des wenigstens einen Monomeren A,
≤ 5 Gew.-% der Gesamtmenge des wenigstens einen Monomeren B, und
≤ 5 Gew.-% der Gesamtmenge des wenigstens einen Radikalinitiators

vorgelegt und daran anschließend die gegebenenfalls verbliebene Restmenge der wenigstens einen RAFT-Verbindung, die gegebenenfalls verbliebene Restmenge des wenigstens einen Monomeren A, die Gesamtmengen bzw. die verbliebenen Restmengen des wenigstens einen Monomeren B und des wenigstens einen Radikalinitiators unter Temperatur - und Druckbedingungen unter denen die Halbwertszeiten des Radikalinitiators ≤ 3 Stunden betragen, d.h unter Polymerisationsbedingungen zugegeben und polymerisiert werden.

**2.** Verfahren nach Anspruch 1, **dadurch gekennzeichnet, dass** die gegebenenfalls verbliebene Restmenge der wenigstens einen RAFT-Verbindung, die gegebenenfalls verbliebene Restmenge des wenigstens einen Monomeren A, die Gesamtmengen bzw. die gegebenenfalls verbliebenen Restmengen des wenigstens einen Monomeren B und des wenigstens einen Radikalinitiators unter Polymerisationsbedingungen kontinuierlich zugegeben werden.

**3.** Verfahren nach einem der Ansprüche 1 und 2, **dadurch gekennzeichnet, dass** die Gesamtmenge der wenigstens einen RAFT-Verbindung vorgelegt wird.

**4.** Verfahren nach einem der Ansprüche 1 bis 3, **dadurch gekennzeichnet, dass** das wässrige Polymerisationsmedium zusätzlich noch ≥ 0,1 und ≤ 20 Gew.-% eines organischen Lösungsmittels mit einer Löslichkeit ≥ 200 g pro 1000 g entionisiertem Wasser bei 20 °C und 1 atm (absolut), bezogen auf die Gesamtwassermenge der wässrigen Polymerisatdispersion enthält.

**5.** Verfahren nach einem der Ansprüche 1 bis 4, **dadurch gekennzeichnet, dass** die Dosierzeit der gegebenenfalls verbliebenen Restmenge des wenigstens einen Monomeren A ≤ 50 % der Dosierzeit der Gesamtmenge bzw. der verbliebenen Restmenge des wenigstens einen Monomeren B beträgt.

**6.** Verfahren nach einem der Ansprüche 1 bis 5, **dadurch gekennzeichnet, dass** die Gesamtmenge des wenigstens einen Monomeren A vorgelegt wird.

**7.** Verfahren nach einem der Ansprüche 1 bis 6, **dadurch gekennzeichnet, dass** die Monomeren A ausgewählt sind aus der Gruppe umfassend Acrylsäure, Methacrylsäure, Acrylamid, 4-Styrolsulfonsäure, 2-Dimethylaminoethylacrylat, 2-Hydroxyethylacrylat und/oder 2-Acrylamido-2-methylpropansulfonsäure.

**8.** Verfahren nach einem der Ansprüche 1 bis 7, **dadurch gekennzeichnet, dass** die Monomeren B ausgewählt sind aus der Gruppe umfassend Methylacrylat, Ethylacrylat, n-Butylacrylat, tert.-Butylacrylat, 2-Ethylhexylacrylat, 2-Propylheptylacrylat, Methylmethacrylat, Ethylmethacrylat, n-Butylmethacrylat, tert.-Butylmethacrylat, 2-Ethylhexylmethacrylat, 2-Propylheptylmethacrylat, 2-Phenoxyethylacrylat, Styrol, Vinyltoluol, 2-Methylstyrol, 4-Methylstyrol, 2-n-Butylstyrol, 4-n-Butylstyrol, 4-n-Decylstyrol, Vinylacetat, Vinylpropionat, Acrylnitril und Methacrylnitril.

## Claims

**1.** A process for the preparation of an aqueous polymer dispersion by free radical polymerization of ethylenically unsaturated monomers in the presence of at least one free radical initiator and at least one RAFT compound in an aqueous polymerization medium,

≥ 1 and ≤ 80% by weight of at least one ethylenically unsaturated monomer having a solubility of ≥ 200 g per 1000 g of dionized water at 20°C and 1 atm (absolute) [monomers A], and
≥ 20 and ≤ 99% by weight of at least one ethylenically unsaturated monomer having a solubility of ≤ 100 g per 1000 g of dionized water at 20 °C and 1 atm (absolute) [monomers B]

being used for the polymerization and the monomers A and B summing to 100% by weight (total amount of monomers),

≥ 0.1 and ≤ 5% by weight of at least one RAFT compound and
≥ 0.01 and ≤ 5% by weight of at least one free radical initiator, based in each case on the total amount of monomers, being used,

wherein first, under temperature and pressure conditions at which the half-lives of the free radical initiator are > 5 hours, only

≥ 50% by weight of the total amount of the at least one RAFT compound,
≥ 10% by weight of the total amount of the at least one monomer A,
≤ 5% by weight of the total amount of the at least one monomer B, and
≤ 5% by weight of the total amount of the at least one free radical initiator

are initially taken in the aqueous polymerization medium and thereafter any remaining residual amount of the at least one RAFT compound, any remaining residual amount of the at least one monomer A, the total amounts or the remaining residual amounts of the at least one monomer B and of the at least one free radical initiator are added under temperature and pressure conditions at which the half-lives of the free radical initiator are ≤ 3 hours, i.e. under polymerization conditions, and are polymerized.

**2.** The process according to claim 1, wherein any remaining residual amount of the at least one RAFT compound, any remaining residual amount of the at least one monomer A, the total amounts or the remaining residual amounts of the at least one monomer B and of the at least one free radical initiator are added continuously under polymerization conditions.

**3.** The process according to either of claims 1 and 2, wherein the total amount of the at least one RAFT compound is initially taken.

**4.** The process according to any of claims 1 to 3, wherein the aqueous polymerization medium additionally comprises ≥ 0.1 and ≤ 20% by weight of an organic solvent having a solubility of ≥ 200 g per 1000 g of dionized water at 20°C and 1 atm (absolute), based on the total amount of water in the aqueous polymer dispersion.

**5.** The process according to any of claim 1 to 4, wherein the metering time of any remaining residual amount of the at least one monomer A is ≤ 50% of the metering time of the total amount or of the remaining residual amount of the at least one monomer B.

**6.** The process according to any of claims 1 to 5, wherein the total amount of the at least one monomer A is initially taken.

**7.** The process according to any of claims 1 to 6, wherein the monomers A are selected from the group consisting of acrylic acid, methacrylic acid, acrylamide, 4-styrenesulfonic acid, 2-dimethylaminoethyl acrylate, 2-hydroxyethyl acrylate and/or 2-acrylamido-2-methylpropanesulfonic acid.

**8.** The process according to any of claims 1 to 7, wherein the monomers B are selected from the group consisting of methyl acrylate, ethyl acrylate, n-butyl acrylate, tert-butyl acrylate, 2-ethylhexyl acrylate, 2-propylheptyl acrylate, methyl methacrylate, ethyl methacrylate, n-butyl methacrylate, tert-butyl methacrylate, 2-ethylhexyl methacrylate, 2-propylheptyl methacrylate, 2-phenoxyethyl acrylate, styrene, vinyltoluene, 2-methylstyrene, 4-methylstyrene, 2-n-butylstyrene, 4-n-butylstyrene, 4-n-decylstyrene, vinyl acetate, vinyl propionate, acrylonitrile and methacrylonitrile.

## Revendications

**1.** Procédé pour la préparation d'une dispersion aqueuse d'un polymère par une polymérisation initiée par voie radicalaire de monomères éthyléniquement insaturés en présence d'au moins un initiateur radicalaire et d'au moins un composé RAFT (transfert de chaîne réversible par addition fragmentation) dans un milieu aqueux de polymérisation, en utilisant, pour la polymérisation
≥ 1 et ≤ 80% en poids d'au moins un monomère éthyléniquement insaturé présentant une solubilité ≥ 200 g par 1000 g d'eau désionisée à 20°C et à 1 atm (absolu) [monomère A], et
≥ 20 et ≤ 99% en poids d'au moins un monomère éthyléniquement insaturé présentant une solubilité ≤ 100 g par 1000 g d'eau désionisée à 20°C et à 1 atm (absolu) [monomère B], et
et la somme des monomères A et B valant 100% en poids (quantité totale de monomères), en utilisant

≥ 0,1 et ≤ 5% en poids d'au moins un composé RAFT, et ≥ 0,01 et ≤ 5% en poids d'au moins un initiateur radicalaire, à chaque fois par rapport à la quantité totale de monomères,
**caractérisé en ce qu'**on dispose au préalable dans le milieu aqueux de polymérisation, dans des conditions de température et de pression dans lesquelles les durées de demi-vie de l'initiateur radicalaire sont > 5 heures, d'abord seulement
≥ 50% en poids de la quantité totale dudit au moins un composé RAFT,
≥ 10% en poids de la quantité totale dudit au moins un monomère A,
≤ 5% en poids de la quantité totale dudit au moins un monomère B, et
≤ 5% en poids de la quantité totale dudit au moins un initiateur radicalaire,
puis on ajoute consécutivement et on polymérise la quantité résiduelle qui reste éventuellement dudit au moins un composé RAFT, la quantité résiduelle qui reste éventuellement dudit au moins un monomère A, les quantités totales ou, selon le cas, les quantités résiduelles qui restent dudit au moins un monomère B et dudit au moins un initiateur radicalaire dans des conditions de température et de pression dans lesquelles les durées de demi-vie de l'initiateur radicalaire sont ≤ 3 heures, c'est-à-dire dans des conditions de polymérisation.

2. Procédé selon la revendication 1, **caractérisé en ce que** la quantité résiduelle qui reste éventuellement dudit au moins un composé RAFT, la quantité résiduelle qui reste éventuellement dudit au moins un monomère A, les quantités totales ou, selon le cas, les quantités résiduelles qui restent dudit au moins un monomère B et dudit au moins un initiateur radicalaire sont ajoutées en continu dans des conditions de polymérisation.

3. Procédé selon l'une quelconque des revendications 1 et 2, **caractérisé en ce qu'**on dispose au préalable la quantité totale dudit au moins un composé RAFT.

4. Procédé selon l'une quelconque des revendications 1 à 3, **caractérisé en ce que** le milieu aqueux de polymérisation contient en outre encore ≥ 0,1 et ≤ 20% en poids d'un solvant organique présentant une solubilité ≥ 200 g par 1000 g d'eau désionisée à 20°C et à 1 atm (absolu), par rapport à la quantité totale d'eau de la dispersion aqueuse de polymère.

5. Procédé selon l'une quelconque des revendications 1 à 4, **caractérisé en ce que** le temps de dosage de ladite quantité résiduelle qui reste éventuellement dudit au moins un monomère A est ≤ 50% du temps de dosage de la quantité totale ou selon le cas de la quantité résiduelle qui reste dudit au moins un monomère B.

6. Procédé selon l'une quelconque des revendications 1 à 5, **caractérisé en ce qu'**on dispose au préalable la quantité totale dudit au moins un monomère A.

7. Procédé selon l'une quelconque des revendications 1 à 6, **caractérisé en ce que** les monomères A sont choisis dans le groupe comprenant l'acide acrylique, l'acide méthacrylique, l'acrylamide, l'acide 4-styrènesulfonique, l'acrylate de 2-diméthylaminoéthyle, l'acrylate de 2-hydroxyéthyle et/ou l'acide 2-acrylamido-2-méthylpropanesulfonique.

8. Procédé selon l'une quelconque des revendications 1 à 7, **caractérisé en ce que** les monomères B sont choisis dans le groupe comprenant l'acrylate de méthyle, l'acrylate d'éthyle, l'acrylate de n-butyle, l'acrylate de tert-butyle, l'acrylate de 2-éthylhexyle, l'acrylate de 2-propylheptyle, le méthacrylate de méthyle, le méthacrylate d'éthyle, le méthacrylate de n-butyle, le méthacrylate de tert-butyle, le méthacrylate de 2-éthylhexyle, le méthacrylate de 2-propylheptyle, l'acrylate de 2-phénoxyéthyle, le styrène, le vinyltoluène, le 2-méthylstyrène, le 4-méthylstyrène, le 2-n-butylstyrène, le 4-n-butylstyrène, le 4-n-décylstyrène, l'acétate de vinyle, le propionate de vinyle, l'acrylonitrile et le méthacrylonitrile.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0355919 A
- WO 9801478 A
- US 6596899 B
- US 6569969 B
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A


### In der Beschreibung aufgeführte Nicht-Patentliteratur


- **J. KRISTINA et al.** *Macromolecules,* 1998, vol. 28, 5381-5385
- **M.J. MONTEIRO.** *J. Polym. Sci., Part A: Polym. Chem.,* 2005, vol. 43, 3189-3204
- **MOAD et al.** *Aust. J. Chem.,* 2005, vol. 58, 379-410
- **CH. BARNER-KOWOLLIK.** Handbook of RAFT Polymerization. Wiley-VCH, 2008, 190
- **C.J. FERGUSSON et al.** *Macromolecules,* 2002, vol. 35, 9243-9245
- **C.J. FERGUSSON et al.** *Macromolecules,* 2005, vol. 38, 2191-2204
- **CHIEFARI et al.** *Macromolecules,* 2003, vol. 36, 2273-2283
- **G. KANIG.** *Kolloid-Zeitschrift & Zeitschrift für Polymere,* vol. 190, 1
- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989